# EUROPEAN PATENT SPECIFICATION

(11) **EP 4 443 136 B1**
(45) Date of publication and mention of the grant of the patent: **02.12.2026**
(21) Application number: 24165470.6
(22) Date of filing: 22.03.2024
(51) Int. Cl.: G01N 21/3581, G01N 21/552, G01N 21/3586, G01N 21/43

(54) **ADSORPTION EVALUATION APPARATUS AND ADSORPTION EVALUATION METHOD**
VORRICHTUNG UND VERFAHREN ZUR ADSORPTIONSBEURTEILUNG
APPAREIL D'ÉVALUATION D'ADSORPTION ET PROCÉDÉ D'ÉVALUATION D'ADSORPTION

(30) Priority: 04.04.2023 JP 2023060766
(43) Date of publication of application: 09.10.2024
(73) Proprietor: Hamamatsu Photonics K.K., Hamamatsu-shi, Shizuoka 435-8558 (JP)
(72) Inventor: YASUDA, Takashi, Shizouka, 435-8558 (JP); MATSUMOTO, Satoshi, Shizuoka, 435-8558 (JP)
(74) Representative: Boult Wade Tennant LLP

(56) References cited:
- CN-B- 111 504 941
- US-A1- 2007 229 094
- US-A1- 2007 235 718
- YOU BORWEN ET AL: "Terahertz volatile gas sensing by using polymer microporous membranes", OPTICS EXPRESS, vol. 23, no. 3, 26 January 2015 (2015-01-26), pages 2048, XP055781233, DOI: 10.1364/OE.23.002048
- TANNO TAKENORI ET AL: "In Situ Observation of Gas Adsorption onto ZIF-8 Using Terahertz Waves", THE JOURNAL OF PHYSICAL CHEMISTRY C, vol. 121, no. 33, 16 August 2017 (2017-08-16), US, pages 17921 - 17924, XP093193957, ISSN: 1932-7447, DOI: 10.1021/acs.jpcc.7b04833
- XU WENDAO ET AL: "Pesticide detection with covalent-organic-framework nanofilms at terahertz band", BIOSENSORS AND BIOELECTRONICS, vol. 209, 1 August 2022 (2022-08-01), Amsterdam , NL, pages 114274, XP093194176, ISSN: 0956-5663, DOI: 10.1016/j.bios.2022.114274

## Description

### TECHNICAL FIELD

The present disclosure relates to an adsorption evaluation apparatus and an adsorption evaluation method.

### BACKGROUND

A porous material having a large number of pores can adsorb a substance in the pores. Compared with the natural porous material (for example, activated carbon), a porous framework, which is an artificially formed porous material, can be formed by arbitrarily designing a structure and a size of pores, and thus, it is expected to be used in various fields.

Examples of the porous framework include a metal organic framework (MOF), a covalent organic framework (COF), a hydrogen-bonded organic framework (HOF), a porous aromatic framework (PAF), and the like.

The MOF is a framework in which a polymeric structure having a pore structure is formed by linking metal ions and cross-linkable organic ligands by coordinate bonds. The COF is a framework in which a polymeric structure having a pore structure is formed by linking organic molecules by covalent bonds of light elements (H, B, C, N, O). The HOF is a framework in which a polymeric structure having a pore structure is formed by linking organic molecules by hydrogen bonds. The PAF is a framework in which a polymeric structure having a pore structure is formed by linking organic molecules by coupling bonds of carbon.

Further, examples of the porous framework also include a prussian blue. The prussian blue is a compound which has been long known as a blue pigment, and is a mixed valence compound having a framework structure. The prussian blue can be an analog by selecting and using a part of constituent elements in the framework structure, and it can be artificially designed. The analog is also referred to as the prussian blue.

In these porous frameworks, a pore structure, a specific surface area, a form, and the like can be artificially designed by precisely taking coordinate bonds and the like at the time of molecular design or appropriately selecting constituent elements, and it is considered that it is possible to construct a complicated framework and express a high-order function. These porous frameworks have been actively studied as functional materials in recent years.

Examples of the field in which the porous framework is expected to be used include an environmental field (for example, reduction of gas concentration by adsorbing toxic gas, CO₂ gas, or the like in the pores of the porous framework), a medical field (for example, quantitative, spatial, and temporal control of drug distribution in a body by introducing the porous framework into the body with a drug adsorbed in the pores in a drug delivery system (DDS)), an energy field (for example, storage of hydrogens adsorbed in the pores of the porous framework), and the like.

When it is possible to evaluate the adsorption of the substance on the porous framework, it is possible to confirm utilization situation of the porous framework, improve utilization form and structure of the porous framework, and the like.

You Borwen et al. "Terahertz volatile gas sensing by using polymer microporous membranes", Opt. Express 23, 2048-2057 (2015) describes an experimental validation of a simple multilayer-stacked microporous polymer membranes in the THz regime for organic vapor sensing under ambient atmosphere and room temperature. The hydrophilic porous polymer structure provides a large surface area to adsorb polar vapors, and exhibits excellent discrimination in different types of organic vapors based on distinct dipole moments. The study also presents measurements of absorption coefficients and refractive indices at various concentrations of volatile vapors.

In Tanno Takenori et al. "In Situ Observation of Gas Adsorption onto ZIF-8 Using Terahertz Waves", J. Phys. Chem. C 2017, 121, 33, 17921-17924 the adsorption behavior of energy-related gases onto ZIF-8 was investigated using terahertz waves, and the adsorption properties of each gas were detailed by monitoring the intensities of the 2 THz absorption peak.

Xu Wendao et al. "Pesticide detection with covalent-organic-framework nanofilms at terahertz band", Biosensors & bioelectronics vol. 209 (2022): 114274 introduces a reticular material - two dimensional covalent organic frameworks (COFs). In this study the COF nanofilm is directly deposited on the dielectric layer of THz absorbers via an in- situ wet-chemistry growth and the resulting THz absorber is tested for pesticide detection.

US 2007/229094 A1 and US 2007/235718 A1 describe porous structures for detecting analytes in THz regime.

A specific surface area / pore distribution measurement by a gas adsorption method is known as a technique for evaluating the adsorption of the substance on the porous material (Patent Document 1, Non Patent Document 1). In this technique, the porous material is placed in a constant temperature environment, gas molecules whose adsorption occupied area is known are adsorbed onto the porous material, and the specific surface area of the porous material is obtained from a gas adsorption amount, or the pore distribution of the porous material is measured from condensation of the gas molecules.

From the change of gas pressure, completion of the adsorption of the gas molecules onto the porous material can be detected, and the adsorption amount of the gas molecules can be obtained. However, in this technique, it is not easy to perform evaluation of the adsorption phenomenon in a steady state, evaluation of the adsorption phenomenon in a liquid, and real time evaluation of a progress process of the adsorption phenomenon.

Further, an evaluation technique using a terahertz wave is also known as a technique for evaluating the adsorption of the substance on the porous material (Patent Document 2, Non Patent Document 2). In the adsorption evaluation technique described in these documents, an absorption coefficient of the porous framework is measured in a band of the terahertz wave by utilizing the fact that the absorption coefficient of the porous framework changes by the adsorption of the substance onto the porous framework which is a porous material, and the adsorption phenomenon of the substance on the porous framework is evaluated based on the measured absorption coefficient.

The adsorption evaluation technique using the terahertz wave is expected to solve the problems of the specific surface area / pore distribution measurement technique by the gas adsorption method described above.
Patent Document 1: Japanese Patent Application Laid-Open Publication No. 2020-176101
Patent Document 2: Japanese Patent Application Laid-Open Publication No. 2010-169658
Patent Document 3: Japanese Patent Application Laid-Open Publication No. 2008-224449
Patent Document 4: Japanese Patent Application Laid-Open Publication No. 2022-052306
Non Patent Document 1: Kenji Hosokawa et al., "Adsorption measurement method", The Carbon Society of Japan "TANSO", Vol. 1976 No.85, pp.71-79 (1976)
Non Patent Document 2: Wei Zhang et al., "Probing the Mechanochemistry of Metal-Organic Frameworks with Low-Frequency Vibrational Spectroscopy", J. Phys. Chem. C, 122, 48, pp.27442-27450 (2018)

### SUMMARY

In studying the adsorption evaluation technique using the terahertz wave, the present inventors have found that the conventional technique has the following problem. That is, the conventional adsorption evaluation technique using the terahertz wave measures the absorption coefficient of the porous framework in the band of the terahertz wave in order to evaluate the adsorption phenomenon of the substance onto the porous framework.

In a certain type of porous framework, presence of an absorption peak near a wavelength of 1.9 THz is observed in a state in which the substance is not adsorbed, and further, the absorption peak near the wavelength of 1.9 THz disappears and a new absorption peak appears at another wavelength in a state in which the substance is adsorbed. Therefore, it is expected that the adsorption phenomenon of the substance can be evaluated based on the measured value of the absorption coefficient by utilizing the above fact.

However, another type of porous framework does not always exhibit an absorption peak within a measurable frequency range, and further, does not always exhibit clear shift of the absorption peak. Therefore, there is a problem that presence or absence, a weight, a type, and the like of the adsorption cannot be determined for the porous frameworks with various types only by the value of the absorption coefficient or the absorption spectrum.

The present invention has been made based on the findings of the present inventors described above, and an object thereof is to provide an apparatus and a method capable of more accurately evaluating an adsorption phenomenon of a substance onto a porous framework.

An embodiment of the present invention is an adsorption evaluation apparatus according to claim 1. The adsorption evaluation apparatus is an apparatus for evaluating adsorption of a substance on a porous framework, and includes (1) a measurement unit for irradiating the porous framework with a terahertz wave, and performing measurement of a refractive index of the porous framework based on the terahertz wave which interacted with the porous framework; and (2) an evaluation unit for performing evaluation of the adsorption of the substance on the porous framework based on the refractive index of the porous framework measured by the measurement unit;
wherein the evaluation unit is configured to perform the evaluation for an amount of the substance adsorbed on the porous framework using a calibration curve which represents a relationship between the adsorption amount of the substance in the porous framework and the refractive index of the porous framework; and
wherein the porous framework is any one of a metal organic framework, a covalent organic framework, a hydrogen-bonded organic framework, a porous aromatic framework, and a prussian blue.

An embodiment of the present invention is an adsorption evaluation method according to claim 7. The adsorption evaluation method is a method for evaluating adsorption of a substance on a porous framework, and includes (1) a measurement step of irradiating the porous framework with a terahertz wave, and performing measurement of a refractive index of the porous framework based on the terahertz wave which interacted with the porous framework; and (2) an evaluation step of performing evaluation of the adsorption of the substance on the porous framework based on the refractive index of the porous framework measured in the measurement step;
wherein in the evaluation step, the evaluation is performed for an amount of the substance adsorbed on the porous framework using a calibration curve which represents a relationship between the adsorption amount of the substance in the porous framework and the refractive index of the porous framework; and
wherein the porous framework is any one of a metal organic framework, a covalent organic framework, a hydrogen-bonded organic framework, a porous aromatic framework, and a prussian blue.

According to the embodiments of the present invention, it is possible to more accurately evaluate an adsorption phenomenon of a substance on a porous framework.

The present invention will be more fully understood from the detailed description given hereinbelow and the accompanying drawings, which are given by way of illustration only and are not to be considered as limiting the present invention. The scope of the present inventions is only limited by the appended claims.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention, which is defined by the appended claims, will be apparent to those skilled in the art from this detailed description.

### BRIEF DESCRIPTION OF THE DRAWINGS

FIG. 1 is a diagram illustrating a configuration of an adsorption evaluation apparatus 1.
FIG. 2 is a flowchart of an adsorption evaluation method.
FIG. 3 is a diagram illustrating a configuration example of an optical system 11.
FIG. 4 is a diagram illustrating another configuration example of the optical system 11.
FIG. 5 is a diagram showing a calibration curve indicating a relationship between an adsorption amount of a substance on a porous framework and a refractive index of the porous framework.
FIG. 6 is a diagram illustrating a configuration example in which measurement is performed in a state in which the porous framework is disposed in an environment containing the substance.
FIG. 7 is a diagram illustrating a configuration example in which measurement is performed in a state in which the porous framework is immersed in a liquid sample obtained by dispersing or dissolving the substance in a liquid medium.
FIG. 8 is a graph showing wavelength dependency of a refractive index of MOF-74 (Zn).
FIG. 9 is a graph showing wavelength dependency of a real part of a complex permittivity of MOF-74 (Zn).
FIG. 10 is a table showing a substance adsorption amount per 12 mg of MOF-74 (Zn), a refractive index change amount at a wavelength of 1.43 THz, and a refractive index change amount per unit adsorption amount.
FIG. 11 is a graph showing wavelength dependency of an absorption coefficient of MOF-74 (Zn).
FIG. 12 is a graph showing wavelength dependency of an imaginary part of a complex permittivity of MOF-74 (Zn).

### DETAILED DESCRIPTION

Hereinafter, embodiments of an adsorption evaluation apparatus and an adsorption evaluation method will be described in detail with reference to the accompanying drawings. In the description of the drawings, the same elements will be denoted by the same reference signs, and redundant description will be omitted. The present invention is only limited by the appended claims and is not limited to these examples.

An adsorption evaluation apparatus and an adsorption evaluation method according to the present embodiment is an apparatus and a method for evaluating adsorption of a substance on a porous framework. According to the present invention, the porous framework which is a host molecule includes any one of a metal organic framework (MOF), a covalent organic framework (COF), a hydrogen-bonded organic framework (HOF), a porous aromatic framework (PAF), a prussian blue. The substance which is a guest molecule is any one which can be adsorbed onto the porous framework.

The adsorption means that the substance is retained in pores on a surface and inside of the porous framework, basket-shaped or lattice-shaped portions, and the like. A state in which the substance is retained on the porous framework may be referred to as inclusion or clathrate, and a state in which the substance is incorporated into the porous framework may be referred to as clathrate compound or clathrate, and hereinafter, retaining of the substance on the porous framework is referred to as the adsorption.

The adsorption evaluation apparatus and the adsorption evaluation method of the present embodiment can not only evaluate a state in which the substance is adsorbed on the porous framework but also evaluate a change in the adsorption state of the substance on the porous framework (progress of adsorption or progress of desorption).

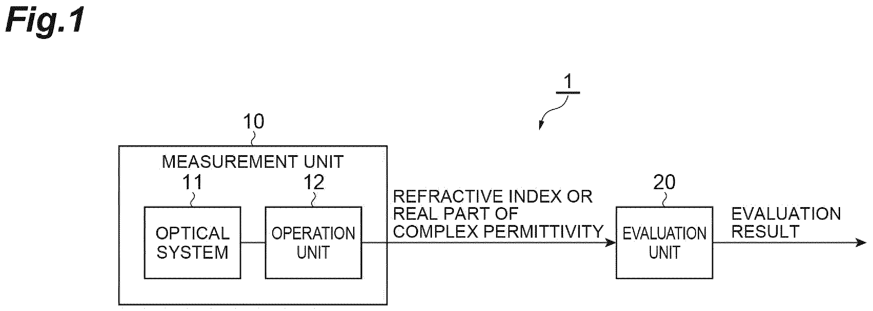

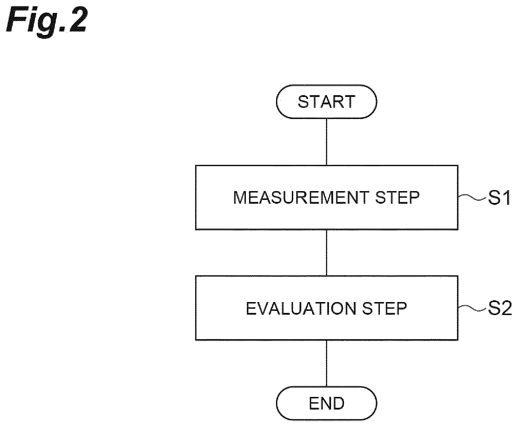

FIG. 1 is a diagram illustrating a configuration of an adsorption evaluation apparatus 1. The adsorption evaluation apparatus 1 includes a measurement unit 10 and an evaluation unit 20. FIG. 2 is a flowchart illustrating an adsorption evaluation method. The adsorption evaluation method includes a measurement step S1 and an evaluation step S2.

In the measurement step S1, the measurement unit 10 irradiates a porous framework being an evaluation object with a terahertz wave, and performs measurement of a refractive index of the porous framework based on the terahertz wave which interacted with the porous framework. The interaction may be any of transmission of the terahertz wave through the porous framework, reflection of the terahertz wave by the porous framework, and total reflection of the terahertz wave by the porous framework. The terahertz wave after interacting with the porous framework has information on the refractive index of the porous framework.

The measurement unit 10 includes an optical system 11 and an operation unit 12. The optical system 11 includes an optical system of the terahertz wave from a generation source for generating the terahertz wave with which the porous framework is to be irradiated to a detection unit for detecting the terahertz wave after interacting with the porous framework. The operation unit 12 performs an operation based on the detection result of the terahertz wave by the detection unit to obtain the refractive index of the porous framework.

The optical system 11 may have any configuration as long as the refractive index or the real part of the complex permittivity of the porous framework can be obtained. The refractive index of the porous framework may be obtained at one certain wavelength, may be obtained at each of a plurality of wavelengths, or further, may be obtained as a spectrum in a certain wavelength range.

In the evaluation step S2, the evaluation unit 20 performs evaluation of adsorption of the substance on the porous framework based on the refractive index of the porous framework which is measured by the measurement unit 10. The evaluation item may be any one of presence or absence, a type, and an amount of the substance adsorbed on the porous framework, or may be two or more of these. According to the present invention, the evaluation is performed for an amount of the substance adsorbed on the porous framework.

The operation unit 12 and the evaluation unit 20 can be configured by a computer including a processing unit (for example, a CPU) for performing calculation and evaluation, a storage unit (for example, a RAM, a hard disk drive) for storing programs for performing the calculation and the evaluation and various data, an input unit (for example, a keyboard, a mouse) for receiving input of measurement conditions, evaluation items, and the like, and a display unit (for example, a liquid crystal display) for displaying evaluation results and the like, and the like.

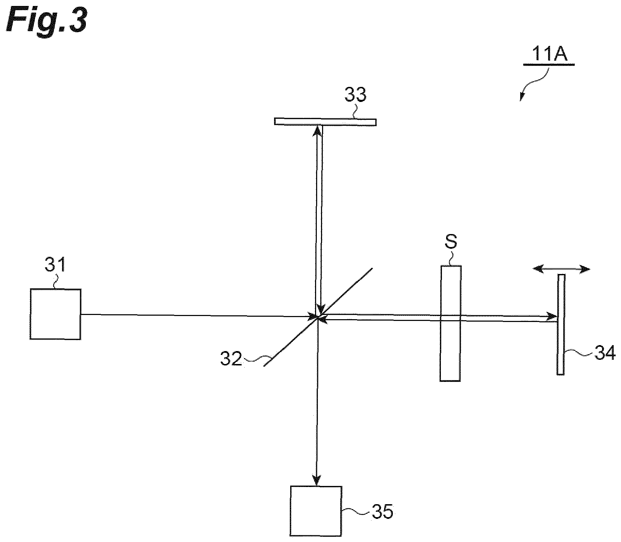

FIG. 3 is a diagram illustrating a configuration example of the optical system 11. An optical system 11A of the configuration example illustrated in this diagram includes a light source 31, a beam splitter 32, a mirror 33, a mirror 34, and a detector 35, and has a configuration of a Michelson interferometer. The light source 31 outputs a single wavelength (narrow band) terahertz wave.

The beam splitter 32 splits the terahertz wave output from the light source 31 into a first split terahertz wave and a second split terahertz wave, outputs the first split terahertz wave to the mirror 33, and outputs the second split terahertz wave to the mirror 34. Further, the beam splitter 32 inputs the first split terahertz wave reflected by the mirror 33, inputs the second split terahertz wave reflected by the mirror 34, and combines the first split terahertz wave and the second split terahertz wave to output the combined wave to the detector 35.

The detector 35 receives the first split terahertz wave and the second split terahertz wave combined and output by the beam splitter 32, and detects an intensity of interference between the first split terahertz wave and the second split terahertz wave.

The porous framework S, which is an evaluation object, is disposed on an optical path between one of the mirror 33 and the mirror 34 (the mirror 34 in the diagram) and the beam splitter 32. Both or one of the mirror 33 and the mirror 34 is movable in a direction perpendicular to a reflection surface.

The interference intensity detected by the detector 35 depends on a difference between respective optical path lengths of the first split terahertz wave and the second split terahertz wave from splitting to combining at the beam splitter 32. Further, the optical path length of the second split terahertz wave depends on the refractive index of the porous framework S disposed on the optical path of the second split terahertz wave. Therefore, the refractive index of the porous framework S can be measured from a change of the interference intensity caused by the movement of the mirror 34.

In addition, the optical system illustrated in FIG. 3 has the configuration of the Michelson interferometer, and further, the optical system may have a configuration of a Mach-Zehnder interferometer. Further, the optical system illustrated in FIG. 3 is an optical system for detecting the interference intensity between the second split terahertz wave transmitted through the porous framework S and the first split terahertz wave, and further, it is also possible to detect the interference intensity between the second split terahertz wave reflected by the porous framework S and the first split terahertz wave to measure the refractive index of the porous framework S from a change of the interference intensity caused by the change of the optical path difference.

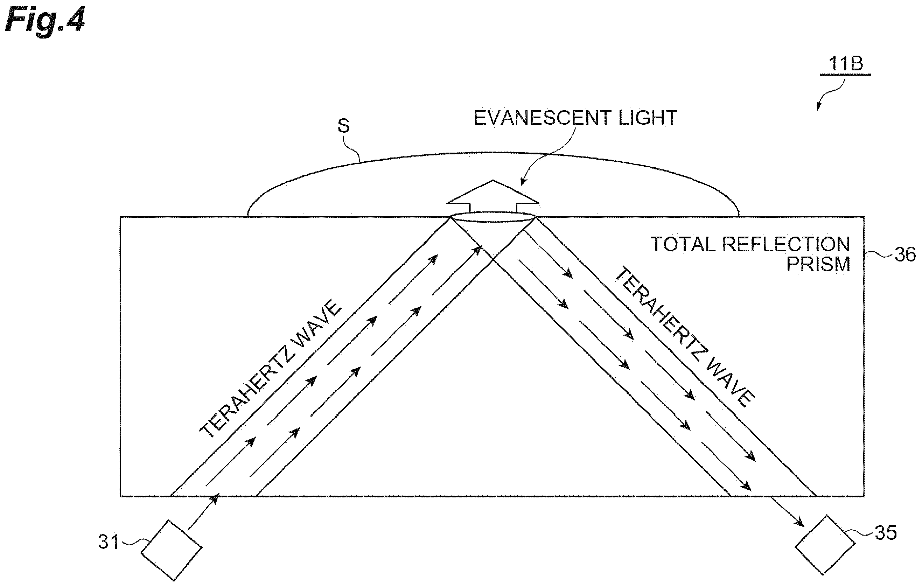

FIG. 4 is a diagram illustrating another configuration example of the optical system 11. An optical system 11B of the configuration example illustrated in this diagram includes a total reflection prism 36 in addition to the light source 31 and the detector 35, and measures the refractive index of the porous framework S by using attenuated total reflection (ATR) spectroscopy.

The porous framework S, which is an evaluation object, is disposed to be in contact with a surface of the total reflection prism 36. The terahertz wave output from the light source 31 passes through the inside of the total reflection prism 36, and then, reaches a boundary surface between the total reflection prism 36 and the porous framework S, and is totally reflected on the boundary surface. In this case, evanescent light of the terahertz wave enters the inside of the porous framework S.

The terahertz wave totally reflected by the boundary surface is detected by the detector 35 after passing through the inside of the total reflection prism 36. The terahertz wave totally reflected by the boundary surface has information on the refractive index of the porous framework S, and thus, the refractive index of the porous framework S can be obtained from the detection result by the detector 35.

In addition, more specifically, a configuration in which time domain spectroscopy (TDS) is used in addition to the ATR is preferable (see Patent Document 3). Further, in order to perform measurement with high reproducibility in the ATR, it is important that the total reflection prism 36 and the porous framework S are in close contact with each other, and there is no gap therebetween. Therefore, it is preferable to use a jig for pressing the porous framework S against the surface of the total reflection prism 36 (see Patent Document 4).

The configuration of the measurement unit 10 (the optical system 11 and the operation unit 12) for performing the measurement of the refractive index of the porous framework may have various other configurations. The configuration of the evaluation unit 20 for performing the evaluation of the adsorption of the substance on the porous framework based on the refractive index of the porous framework may also have various other configurations.

Outside the scope of the present invention, instead of the refractive index, the real part of the complex permittivity may be measured and used for performing the evaluation.

For example, the refractive index of the porous framework may be measured by using a critical angle method (Abbe method). The refractive index of the porous framework may be measured by using ellipsometry or the like. Further, the refractive index or the real part of the complex permittivity of the porous framework may be measured by using time domain spectroscopy (TDS).

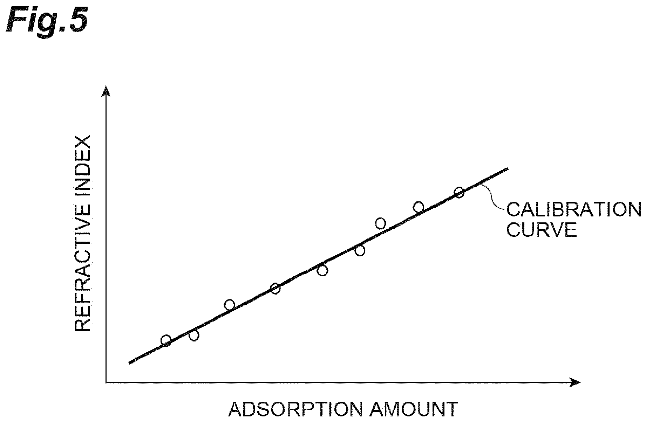

According to the present invention, the refractive index is measured in advance when the adsorption amount of the substance in the porous framework is set to each of various values, a calibration curve (FIG. 5) representing a relationship between the adsorption amount of the substance in the porous framework and the refractive index of the porous framework is prepared, and the adsorption amount of the substance on the porous framework is obtained from the measured refractive index using the calibration curve. FIG. 5 is a diagram showing the calibration curve indicating the relationship between the adsorption amount of the substance on the porous framework and the refractive index of the porous framework.

The adsorption of the substance on the porous framework may be evaluated from the refractive index of the porous framework by using machine learning. For example, the refractive index of the porous framework is measured by setting various conditions for the type of the porous framework, the type of the substance, the adsorption amount of the substance, and the like, and a machine learning unit is trained using the above conditions and the measured values of the refractive index as teaching data. The trained machine learning unit is used to estimate the type of the porous framework, the type of the substance, and the adsorption amount of the substance, and the like from the measured refractive index of the porous framework.

The measurement of the refractive index (or, outside the scope of the present invention, the real part of the complex permittivity) of the porous framework and the evaluation of the adsorption of the substance on the porous framework based on the measurement result may be performed for one portion of the porous framework, or may be performed for each of a plurality of portions of the porous framework.

In the latter case, the measurement and the evaluation can be performed for each irradiation portion on the porous framework by scanning incident position of the terahertz wave on the porous framework. In addition, the measurement and the evaluation can be performed in a certain irradiation range on the porous framework by simultaneously irradiating the irradiation range with the terahertz wave. As described above, by performing the measurement and the evaluation for each of the plurality of portions of the porous framework, a substance adsorption distribution on the porous framework can be evaluated.

In the measurement step, the measurement may be performed at each of a plurality of measurement timings in a change process (progress of adsorption or progress of desorption) of the adsorption of the substance on the porous framework, and in the evaluation step, the evaluation of the adsorption may be performed based on the measurement result at each of the plurality of measurement timings. In this case, the evaluation of a temporal change of the adsorption of the substance on the porous framework may be performed.

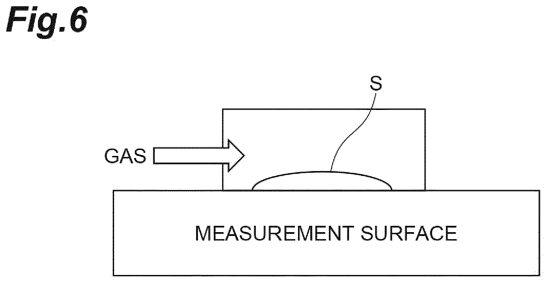

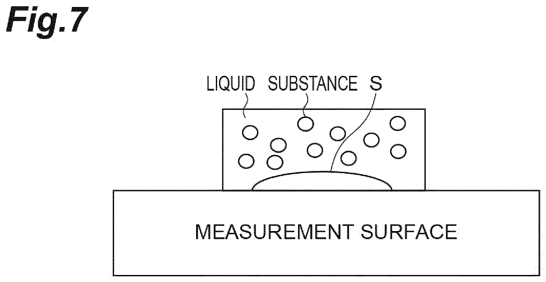

Further, in the measurement step, the measurement may be performed at each of the plurality of measurement timings in the change process of the adsorption of the substance on the porous framework in a state in which the porous framework is disposed in an environment containing the substance (FIG. 6). Further, in the measurement step, the measurement may be performed in a state in which the porous framework is immersed in a liquid sample obtained by dispersing or dissolving the substance in a liquid medium (FIG. 7).

FIG. 6 is a diagram illustrating a configuration example in which the measurement is performed in a state in which the porous framework is disposed in the environment containing the substance. In the configuration example illustrated in this diagram, the porous framework S, which is an evaluation object, is disposed in a closed space formed on a measurement surface, and a gas to be adsorbed on the porous framework S is introduced into the closed space. By measuring the refractive index of the porous framework S while introducing the gas, it is possible to evaluate the degree of increase of the gas adsorption amount onto the porous framework S from the temporal change of the refractive index of the porous framework S.

FIG. 7 is a diagram illustrating a configuration example in which the measurement is performed in a state in which the porous framework is immersed in the liquid sample obtained by dispersing or dissolving the substance in the liquid medium. In the configuration example illustrated in this diagram, the porous framework S, which is an evaluation object, is disposed on a measurement surface, and the porous framework S is covered with the liquid sample in which the substance is dispersed or dissolved in the liquid medium. Even in the above configuration, the refractive index of the porous framework can be measured, and the adsorption of the substance on the porous framework S can be evaluated. In addition, absorption of the terahertz wave in the liquid is large, and thus, it is preferable to measure the refractive index of the porous framework S by the ATR.

Next, an example will be described. In the present example, MOF-74 (Zn) was used as the porous framework. MOF-74 (Zn) is the metal organic framework having a pore structure of a honeycomb structure by linking benzene rings as cross-linkable organic ligands and Zn ions by coordinate bonds. This MOF-74 (Zn) was vacuum heated to be in a state in which the substance was not adsorbed.

Further, water, hexane, and ethanol were respectively adsorbed onto MOF-74 (Zn). In each of the above four states (no adsorption, adsorption of water, adsorption of hexane, and adsorption of ethanol), the refractive index, the absorption coefficient, the real part of the complex permittivity, and the imaginary part of the complex permittivity of MOF-74 (Zn) were measured in a wavelength range of 0.5 THz to 6.5 THz.

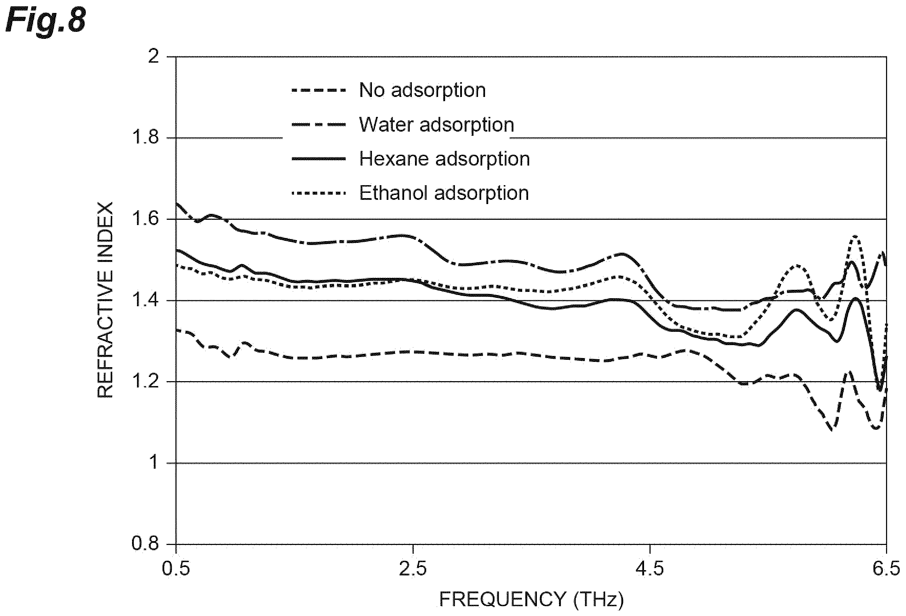

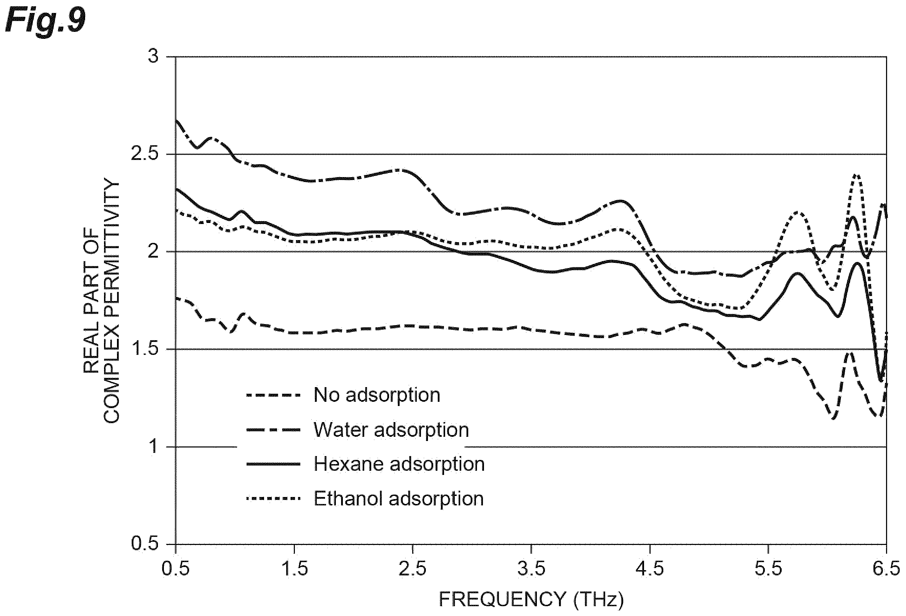

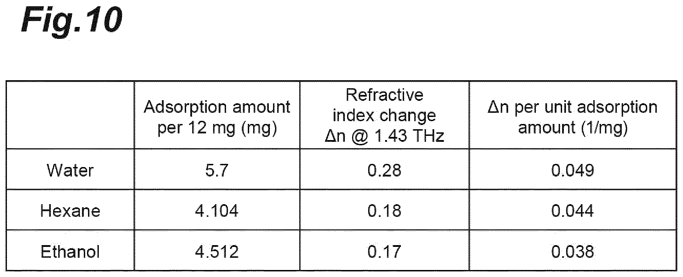

FIG. 8 is a graph showing the wavelength dependency of the refractive index of MOF-74 (Zn). FIG. 9 is a graph showing the wavelength dependency of the real part of the complex permittivity of MOF-74 (Zn). FIG. 10 is a table showing the substance adsorption amount per 12 mg of MOF-74 (Zn), the refractive index change amount at a wavelength of 1.43 THz, and the refractive index change amount per unit adsorption amount.

The refractive index and the real part of the complex permittivity have the similar wavelength dependencies. That is, the evaluation of the adsorption of the substance on the porous framework is possible not only from the refractive index but, outside the scope of the present invention, also from the real part of the complex permittivity.

The value of the refractive index or the real part of the complex permittivity of the porous framework changes depending on presence or absence of the adsorption of the substance onto the porous framework. The change amount of the value of the refractive index or the real part of the complex permittivity of the porous framework differs depending on the amount of the adsorption of the substance onto the porous framework. The wavelength dependency of the refractive index or the real part of the complex permittivity of the porous framework differs depending on the type of the substance adsorbed onto the porous framework.

When the relationship between the substance absorption and the refractive index change was examined using other types of the porous frameworks, it was confirmed that, in any porous framework, the refractive index changed depending on presence or absence of the adsorption, the type of the adsorbed substance, and the amount of the adsorbed substance.

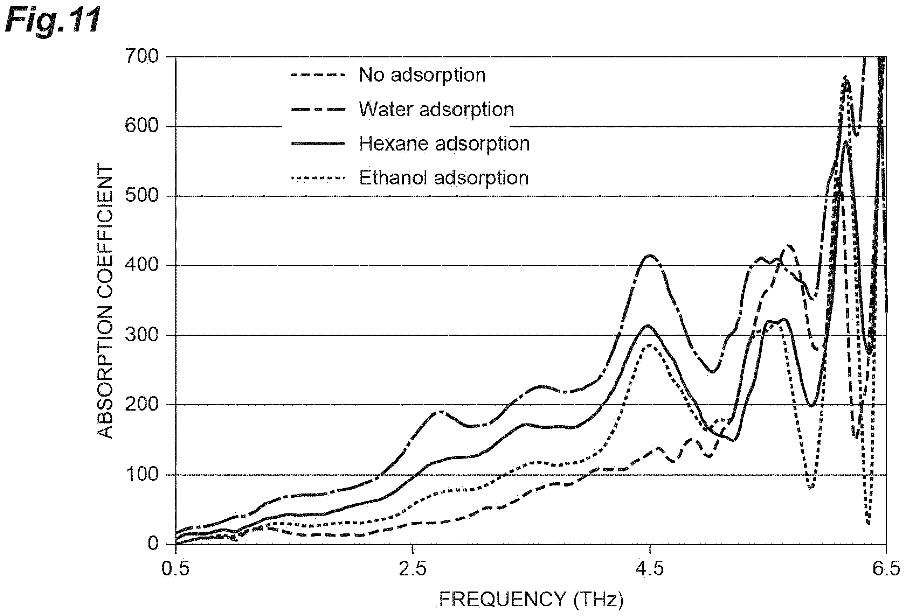

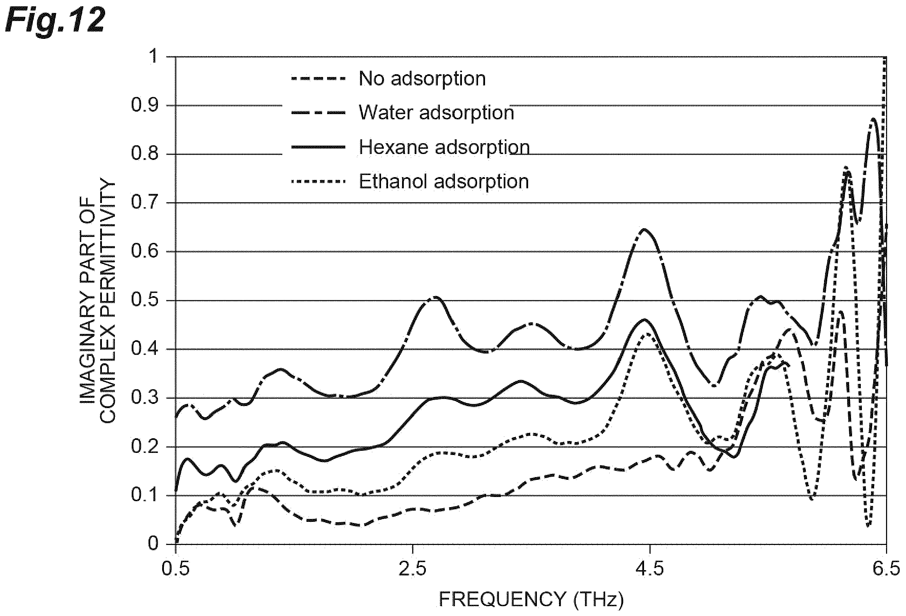

FIG. 11 is a graph showing the wavelength dependency of the absorption coefficient of MOF-74 (Zn). FIG. 12 is a graph showing the wavelength dependency of the imaginary part of the complex permittivity of MOF-74 (Zn). It can be seen that the absorption spectrum changes due to the adsorption. It can be also seen that the absorption peak wavelength differs depending on the type of the adsorbed substance.

However, in a certain type of porous framework, the absorption peak does not always appear within a measurable frequency range, and further, a clear shift of the absorption peak also does not always appear. Therefore, presence or absence, a weight, a type, and the like of the adsorption cannot be determined for the porous frameworks with various types only by using the value of the absorption coefficient or the absorption spectrum.

In addition, in the measurement step, the measurement of the absorption coefficient or the imaginary part of the complex permittivity of the porous framework may be performed in addition to the measurement of the refractive index (or, outside the scope of the present invention, the real part of the complex permittivity) of the porous framework based on the terahertz wave which interacted with the porous framework. In this case, in the evaluation step, the evaluation of the adsorption of the substance on the porous framework can be performed based on the absorption coefficient or the imaginary part of the complex permittivity of the porous framework in addition to the refractive index (or, outside the scope of the present invention, the real part of the complex permittivity) of the porous framework.

In the example described above, MOF-74 (Zn) was used as the porous framework, and in addition, similar results were obtained when MOF-74 (Mg), ZIF-8, UiO-66, and the like were used as the porous framework. MOF-74 (Mg) is the metal organic framework having a pore structure of a honeycomb structure by linking benzene rings as cross-linkable organic ligands and Mg ions by coordinate bonds.

ZIF-8 is a zeolitic imidazolate framework (ZIF), which is a type of the metal organic framework, and is prepared from metal ions and imidazolate anions. UiO-66 is a type of the metal organic framework prepared from ZrCl₄ and p-benzenedicarboxylic acid (H₂ benzene-1,4-dicarboxylate). Similar results were obtained for other types of porous frameworks.

In the present example, the porous framework is irradiated with the terahertz wave, and the measurement of the refractive index or the real part of the complex permittivity of the porous framework is performed based on the terahertz wave which interacted with the porous framework. Further, the evaluation of the adsorption of the substance on the porous framework is performed based on the measured value of the refractive index or the real part of the complex permittivity of the porous framework. Therefore, it is also possible to simultaneously evaluate presence or absence, a type and an amount of the substance being adsorbed on the porous framework.

Further, the problem of the specific surface area / pore distribution measurement by the gas adsorption method can be solved, the real time evaluation of the adsorption is possible, and further, the evaluation of the adsorption phenomenon in the liquid is also possible. In addition, compared with the adsorption evaluation based on the absorption of the terahertz wave in the porous framework, it is possible to evaluate the adsorption phenomenon of the substance onto the porous framework more accurately.

The adsorption evaluation apparatus and the adsorption evaluation method are not limited to the embodiments and configuration examples described above, and various modifications, within the scope of the appended claims, are possible.

From the invention thus described, it will be obvious that the invention may be varied in many ways, within the scope of the following claims.

## Claims

1. An adsorption evaluation apparatus (1) for evaluating adsorption of a substance on a porous framework (S), the apparatus comprising:
a measurement unit (10) for irradiating the porous framework with a terahertz wave, and performing measurement of a refractive index of the porous framework based on the terahertz wave which interacted with the porous framework; and
an evaluation unit (20) for performing evaluation of the adsorption of the substance on the porous framework based on the refractive index of the porous framework measured by the measurement unit;
wherein the evaluation unit is configured to perform the evaluation for an amount of the substance adsorbed on the porous framework using a calibration curve which represents a relationship between the adsorption amount of the substance in the porous framework and the refractive index of the porous framework; and
wherein the porous framework is any one of a metal organic framework, a covalent organic framework, a hydrogen-bonded organic framework, a porous aromatic framework, and a prussian blue.

2. The adsorption evaluation apparatus according to Claim 1, wherein the evaluation unit is further configured to perform the evaluation for any one or more of presence or absence, and a type, of the substance adsorbed on the porous framework.

3. The adsorption evaluation apparatus according to Claim 1 or 2, wherein
the measurement unit is configured to perform the measurement at each of a plurality of measurement timings in a change process of the adsorption of the substance on the porous framework, and
the evaluation unit is configured to perform the evaluation at each of the plurality of measurement timings based on the refractive index of the porous framework measured at each of the plurality of measurement timings.

4. The adsorption evaluation apparatus according to Claim 3, wherein the evaluation unit is configured to perform the evaluation of a temporal change of the adsorption of the substance on the porous framework based on the refractive index of the porous framework measured at each of the plurality of measurement timings.

5. The adsorption evaluation apparatus according to any one of Claims 1 to 4, wherein the measurement unit is configured to perform the measurement by attenuated total reflection spectroscopy.

6. The adsorption evaluation apparatus according to any one of Claims 1 to 5, wherein
the measurement unit is configured to perform measurement of an absorption coefficient or an imaginary part of the complex permittivity of the porous framework in addition to the measurement of the refractive index of the porous framework based on the terahertz wave which interacted with the porous framework, and
the evaluation unit is configured to perform the evaluation of the adsorption of the substance on the porous framework based on the absorption coefficient or the imaginary part of the complex permittivity of the porous framework in addition to the refractive index of the porous framework measured by the measurement unit.

7. An adsorption evaluation method for evaluating adsorption of a substance on a porous framework (S), the method comprising:
a measurement step (S1) of irradiating the porous framework with a terahertz wave, and performing measurement of a refractive index of the porous framework based on the terahertz wave which interacted with the porous framework; and
an evaluation step (S2) of performing evaluation of the adsorption of the substance on the porous framework based on the refractive index of the porous framework measured in the measurement step;
wherein in the evaluation step, the evaluation is performed for an amount of the substance adsorbed on the porous framework using a calibration curve which represents a relationship between the adsorption amount of the substance in the porous framework and the refractive index of the porous framework; and
wherein the porous framework is any one of a metal organic framework, a covalent organic framework, a hydrogen-bonded organic framework, a porous aromatic framework, and a prussian blue.

8. The adsorption evaluation method according to Claim 7, wherein in the evaluation step, the evaluation is further performed for any one or more of presence or absence, and a type, of the substance adsorbed on the porous framework.

9. The adsorption evaluation method according to Claim 7 or 8, wherein
in the measurement step, the measurement is performed at each of a plurality of measurement timings in a change process of the adsorption of the substance on the porous framework, and
in the evaluation step, the evaluation is performed at each of the plurality of measurement timings based on the refractive index of the porous framework measured at each of the plurality of measurement timings.

10. The adsorption evaluation method according to Claim 9, wherein in the evaluation step, the evaluation of a temporal change of the adsorption of the substance on the porous framework is performed based on the refractive index of the porous framework measured at each of the plurality of measurement timings.

11. The adsorption evaluation method according to Claim 9, wherein in the measurement step, the measurement is performed at each of the plurality of measurement timings in the change process of the adsorption of the substance on the porous framework in a state in which the porous framework is disposed in an environment containing the substance.

12. The adsorption evaluation method according to any one of Claims 7 to 11, wherein in the measurement step, the measurement is performed in a state in which the porous framework is immersed in a liquid sample obtained by dispersing or dissolving the substance in a liquid medium.

13. The adsorption evaluation method according to any one of Claims 7 to 12, wherein in the measurement step, the measurement is performed by attenuated total reflection spectroscopy.

14. The adsorption evaluation method according to any one of Claims 7 to 13, wherein
in the measurement step, measurement of an absorption coefficient or an imaginary part of the complex permittivity of the porous framework is performed in addition to the measurement of the refractive index of the porous framework based on the terahertz wave which interacted with the porous framework, and
in the evaluation step, the evaluation of the adsorption of the substance on the porous framework is performed based on the absorption coefficient or the imaginary part of the complex permittivity of the porous framework in addition to the refractive index or the real part of the complex permittivity of the porous framework measured in the measurement step.

## Patentansprüche

1. Adsorptionsbewertungsvorrichtung (1) zum Bewerten der Adsorption einer Substanz an einem porösen Gerüst (S), wobei die Vorrichtung umfasst:
eine Messeinheit (10) zum Bestrahlen des porösen Gerüsts mit einer Terahertz-Welle und zum Durchführen einer Messung des Brechungsindex des porösen Gerüsts auf der Grundlage der mit dem porösen Gerüst in Wechselwirkung getretenen Terahertz-Welle; und
eine Bewertungseinheit (20) zum Durchführen einer Bewertung der Adsorption der Substanz an dem porösen Gerüst auf der Grundlage des von der Messeinheit gemessenen Brechungsindex des porösen Gerüsts;
wobei die Bewertungseinheit konfiguriert ist, um die Bewertung der Menge der an dem porösen Gerüst adsorbierten Substanz unter Verwendung einer Eichkurve durchzuführen, die eine Beziehung zwischen der Adsorptionsmenge der Substanz im porösen Gerüst und dem Brechungsindex des porösen Gerüsts darstellt; und
wobei das poröse Gerüst eines aus der Gruppe bestehend aus einem metallorganischen Gerüst, einem kovalenten organischen Gerüst, einem durch Wasserstoffbrückenbindungen verbundenen organischen Gerüst, einem porösen aromatischen Gerüst und einem Preußischblau ist.

2. Adsorptionsbewertungsvorrichtung nach Anspruch 1, bei der die Bewertungseinheit ferner konfiguriert ist, um die Bewertung hinsichtlich des Vorhandenseins oder Fehlens sowie der Art der an dem porösen Gerüst adsorbierten Substanz durchzuführen.

3. Adsorptionsbewertungsvorrichtung nach Anspruch 1 oder 2, bei der die Messeinheit konfiguriert ist, um in einem Veränderungsprozess der Adsorption der Substanz an dem porösen Gerüst die Messung zu jedem einer Mehrzahl von Messzeitpunkten durchzuführen, und
die Bewertungseinheit konfiguriert ist, um zu jedem der Mehrzahl von Messzeitpunkten die Bewertung auf der Grundlage des zu jedem der Mehrzahl von Messzeitpunkten gemessenen Brechungsindex des porösen Gerüsts durchzuführen.

4. Adsorptionsbewertungsvorrichtung nach Anspruch 3, bei der die Bewertungseinheit konfiguriert ist, um die Bewertung einer zeitlichen Veränderung der Adsorption der Substanz am porösen Gerüst auf der Grundlage des zu jedem der Mehrzahl von Messzeitpunkten gemessenen Brechungsindex des porösen Gerüsts durchzuführen.

5. Adsorptionsbewertungsvorrichtung nach einem der Ansprüche 1 bis 4, bei der die Messeinheit konfiguriert ist, um die Messung mittels abgeschwächter Totalreflexionsspektroskopie durchzuführen.

6. Adsorptionsbewertungsvorrichtung nach einem der Ansprüche 1 bis 5, bei der
die Messeinheit konfiguriert ist, um zusätzlich zur Messung des Brechungsindex des porösen Gerüsts auf der Grundlage der mit dem porösen Gerüst in Wechselwirkung getretenen Terahertz-Welle eine Messung des Absorptionskoeffizienten oder des Imaginärteils der komplexen Permittivität des porösen Gerüsts durchzuführen, und
die Bewertungseinheit konfiguriert ist, um die Bewertung der Adsorption der Substanz an dem porösen Gerüst auf der Grundlage nicht nur des von der Messeinheit gemessenen Brechungsindex des porösen Gerüsts, sondern auch des Absorptionskoeffizienten oder des Imaginärteils der komplexen Permittivität des porösen Gerüsts durchzuführen.

7. Adsorptionsbewertungsverfahren zur Bewertung der Adsorption einer Substanz an einem porösen Gerüst (S), wobei das Verfahren umfasst:
einen Messschritt (S1), bei dem das poröse Gerüst mit einer Terahertz-Welle bestrahlt wird und eine Messung des Brechungsindex des porösen Gerüsts auf der Grundlage der mit dem porösen Gerüst in Wechselwirkung getretenen Terahertz-Welle durchgeführt wird; und
einen Bewertungsschritt (S2), bei dem eine Bewertung der Adsorption der Substanz an dem porösen Gerüst auf der Grundlage des im Messschritt gemessenen Brechungsindex des porösen Gerüsts durchgeführt wird;
wobei im Bewertungsschritt die Bewertung der an dem porösen Gerüst adsorbierten Substanzmenge unter Verwendung einer Eichkurve erfolgt, die eine Beziehung zwischen der Adsorptionsmenge der Substanz in dem porösen Gerüst und dem Brechungsindex des porösen Gerüsts darstellt; und
wobei das poröse Gerüst eines von einem metallorganischen Gerüst, einem kovalenten organischen Gerüst, einem durch Wasserstoffbrückenbindungen verbundenen organischen Gerüst, einem porösen aromatischen Gerüst und einem Preußischblau ist.

8. Verfahren zur Adsorptionsbewertung nach Anspruch 7, wobei im Bewertungsschritt die Bewertung ferner hinsichtlich des Vorhandenseins oder Fehlens sowie der Art der an dem porösen Gerüst adsorbierten Substanz durchgeführt wird.

9. Verfahren zur Adsorptionsbewertung nach Anspruch 7 oder 8, bei dem
im Messschritt die Messung der Adsorption der Substanz am porösen Gerüst im Veränderungsprozess zu jedem einer Mehrzahl von Messzeitpunkten durchgeführt wird, und
im Bewertungsschritt die Bewertung zu jedem der Mehrzahl von Messzeitpunkten auf der Grundlage des an jedem der Mehrzahl von Messzeitpunkten gemessenen Brechungsindex des porösen Gerüsts durchgeführt wird.

10. Verfahren zur Adsorptionsbewertung nach Anspruch 9, bei dem im Bewertungsschritt die Bewertung einer zeitlichen Veränderung der Adsorption der Substanz an dem porösen Gerüst auf der Grundlage des an jedem der mehreren Messzeitpunkte gemessenen Brechungsindex des porösen Gerüsts durchgeführt wird.

11. Verfahren zur Adsorptionsbewertung nach Anspruch 9, bei dem im Messschritt die Messung zu jedem der mehreren Messzeitpunkte im Veränderungsprozess der Adsorption der Substanz an dem porösen Gerüst in einem Zustand durchgeführt wird, in dem das poröse Gerüst in einer die Substanz enthaltenden Umgebung angeordnet ist.

12. Verfahren zur Adsorptionsbewertung nach einem der Ansprüche 7 bis 11, bei dem im Messschritt die Messung in einem Zustand durchgeführt wird, in dem das poröse Gerüst in eine flüssige Probe eingetaucht ist, die durch Dispergieren oder Auflösen der Substanz in einem flüssigen Medium erhalten wurde.

13. Verfahren zur Adsorptionsbewertung nach einem der Ansprüche 7 bis 12, bei dem im Messschritt die Messung mittels abgeschwächter Totalreflexionsspektroskopie durchgeführt wird.

14. Verfahren zur Adsorptionsbewertung nach einem der Ansprüche 7 bis 13, bei dem
im Messschritt zusätzlich zur Messung des Brechungsindex des porösen Gerüsts auf der Grundlage der mit dem porösen Gerüst in Wechselwirkung getretenen Terahertz-Welle eine Messung des Absorptionskoeffizienten oder des Imaginärteils der komplexen Permittivität des porösen Gerüsts durchgeführt wird, und
im Bewertungsschritt die Bewertung der Adsorption der Substanz an dem porösen Gerüst auf der Grundlage nicht nur des im Messschritt gemessenen Brechungsindex oder des Realteil der komplexen Permittivität des porösen Gerüsts sondern auch des Absorptionskoeffizienten oder des Imaginärteils der komplexen Permittivität des porösen Gerüsts durchgeführt wird.

## Revendications

1. Appareil d'évaluation d'adsorption (1) pour évaluer l'adsorption d'une substance sur une structure poreuse (S), l'appareil comprenant :
une unité de mesure (10) destinée à irradier la structure poreuse avec une onde térahertz, et à effectuer une mesure d'un indice de réfraction de la structure poreuse sur la base de l'onde térahertz qui a interagi avec la structure poreuse ; et
une unité d'évaluation (20) pour effectuer une évaluation de l'adsorption de la substance sur la structure poreuse sur la base de l'indice de réfraction de la structure poreuse mesuré par l'unité de mesure ;
dans lequel l'unité d'évaluation est configurée pour effectuer l'évaluation d'une quantité de la substance adsorbée sur la structure poreuse en utilisant une courbe d'étalonnage qui représente une relation entre la quantité d'adsorption de la substance dans la structure poreuse et l'indice de réfraction de la structure poreuse ; et
dans lequel la structure poreuse est l'une quelconque d'une structure organique métallique, d'une structure organique covalente, d'une structure organique liée à l'hydrogène, d'une structure aromatique poreuse et d'un bleu de Prusse.

2. Appareil d'évaluation d'adsorption selon la revendication 1, dans lequel l'unité d'évaluation est en outre configurée pour effectuer l'évaluation pour un quelconque ou plusieurs parmi la présence ou l'absence, et un type, de la substance adsorbée sur la structure poreuse.

3. Appareil d'évaluation d'adsorption selon la revendication 1 ou 2, dans lequel :
l'unité de mesure est configurée pour effectuer la mesure à chacun d'une pluralité de temps de mesure dans un processus de changement de l'adsorption de la substance sur la structure poreuse, et
l'unité d'évaluation est configurée pour effectuer l'évaluation à chacun de la pluralité de temps de mesure sur la base de l'indice de réfraction de la structure poreuse mesuré à chacun de la pluralité de temps de mesure.

4. Appareil d'évaluation d'adsorption selon la revendication 3, dans lequel l'unité d'évaluation est configurée pour effectuer l'évaluation d'un changement temporel de l'adsorption de la substance sur la structure poreuse sur la base de l'indice de réfraction de la structure poreuse mesuré à chacun de la pluralité de temps de mesure.

5. Appareil d'évaluation d'adsorption selon l'une quelconque des revendications 1 à 4, dans lequel l'unité de mesure est configurée pour effectuer la mesure par spectroscopie à réflexion totale atténuée.

6. Appareil d'évaluation d'adsorption selon l'une quelconque des revendications 1 à 5, dans lequel
l'unité de mesure est configurée pour effectuer une mesure d'un coefficient d'absorption ou d'une partie imaginaire de la permittivité complexe de la structure poreuse en plus de la mesure de l'indice de réfraction de la structure poreuse sur la base de l'onde térahertz qui a interagi avec la structure poreuse, et
l'unité d'évaluation est configurée pour effectuer l'évaluation de l'adsorption de la substance sur la structure poreuse sur la base du coefficient d'absorption ou de la partie imaginaire de la permittivité complexe de la structure poreuse en plus de l'indice de réfraction de la structure poreuse mesuré par l'unité de mesure.

7. Procédé d'évaluation d'adsorption pour évaluer l'adsorption d'une substance sur une structure poreuse (S), le procédé comprenant :
une étape de mesure (S1) consistant à irradier la structure poreuse avec une onde térahertz, et à effectuer une mesure d'un indice de réfraction de la structure poreuse sur la base de l'onde térahertz qui a interagi avec la structure poreuse ; et
une étape d'évaluation (S2) consistant à effectuer une évaluation de l'adsorption de la substance sur la structure poreuse sur la base de l'indice de réfraction de la structure poreuse mesuré à l'étape de mesure ;
dans lequel dans l'étape d'évaluation, l'évaluation est effectuée pour une quantité de la substance adsorbée sur la structure poreuse en utilisant une courbe d'étalonnage qui représente une relation entre la quantité d'adsorption de la substance dans la structure poreuse et l'indice de réfraction de la structure poreuse ; et
dans lequel la structure poreuse est l'une quelconque d'une structure organique métallique, d'une structure organique covalente, d'une structure organique liée à l'hydrogène, d'une structure aromatique poreuse et d'un bleu de Prusse.

8. Procédé d'évaluation d'adsorption selon la revendication 7, dans lequel dans l'étape d'évaluation, l'évaluation est en outre effectuée pour un ou plusieurs parmi la présence ou l'absence, et un type, de la substance adsorbée sur la structure poreuse.

9. Procédé d'évaluation d'adsorption selon la revendication 7 ou 8, dans lequel
dans l'étape de mesure, la mesure est effectuée à chacun d'une pluralité de temps de mesure dans un processus de changement de l'adsorption de la substance sur la structure poreuse, et
dans l'étape d'évaluation, l'évaluation est effectuée à chacun de la pluralité de temps de mesure sur la base de l'indice de réfraction de la structure poreuse mesuré à chacun de la pluralité de temps de mesure.

10. Procédé d'évaluation d'adsorption selon la revendication 9, dans lequel dans l'étape d'évaluation, l'évaluation d'un changement temporel de l'adsorption de la substance sur la structure poreuse est réalisée sur la base de l'indice de réfraction de la structure poreuse mesuré à chacun de la pluralité de temps de mesure.

11. Procédé d'évaluation d'adsorption selon la revendication 9, dans lequel dans l'étape de mesure, la mesure est effectuée à chacun de la pluralité de temps de mesure dans le processus de changement de l'adsorption de la substance sur la structure poreuse dans un état dans lequel la structure poreuse est disposée dans un environnement contenant la substance.

12. Procédé d'évaluation d'adsorption selon l'une quelconque des revendications 7 à 11, dans lequel dans l'étape de mesure, la mesure est effectuée dans un état dans lequel la structure poreuse est immergée dans un échantillon liquide obtenu par dispersion ou dissolution de la substance dans un milieu liquide.

13. Procédé d'évaluation d'adsorption selon l'une quelconque des revendications 7 à 12, dans lequel dans l'étape de mesure, la mesure est effectuée par spectroscopie à réflexion totale atténuée.

14. Procédé d'évaluation de l'adsorption selon l'une quelconque des revendications 7 à 13, dans lequel
dans l'étape de mesure, une mesure d'un coefficient d'absorption ou d'une partie imaginaire de la permittivité complexe de la structure poreuse est effectuée en plus de la mesure de l'indice de réfraction de la structure poreuse sur la base de l'onde térahertz qui a interagi avec la structure poreuse, et
dans l'étape d'évaluation, l'évaluation de l'adsorption de la substance sur la structure poreuse est réalisée sur la base du coefficient d'absorption ou de la partie imaginaire de la permittivité complexe de la structure poreuse en plus de l'indice de réfraction ou de la partie réelle de la permittivité complexe de la structure poreuse mesuré(e) dans l'étape de mesure.
